# EUROPEAN PATENT APPLICATION

(11) **EP 0 885 790 A1**
(43) Date of publication of application: **23.12.1998**
(21) Application number: 98304596.4
(22) Date of filing: 10.06.1998
(51) Int. Cl.: B60S 1/38

(54) **Improvements relating to windscreen wiper blade refills**

(30) Priority: 21.06.1997 GB 9713088
(71) Applicant: TRICO PRODUCTS CORPORATION, Buffalo, NY 14203-1298 (US)
(72) Inventor: Smith, Jonathan, Blackwood, Gwent, NP2 1HQ (GB)
(74) Representative: James, Michael John Gwynne

(57) **Abstract**

A vertebra defines a pair of upper grooves 4 and an alternate pair of lower grooves 5. The inner faces of the grooves 5 are set apart to a greater extent to the inner faces of the grooves 4. An internal passageway 6 for the head of a wiper rubber 7 extends the length of the vertebra and communicates through a restricted mouth in the lower face 2. A claw 9 can be supported in the grooves 4. A larger claw, whose claw arms are set further apart, can be supported in the grooves 5.

## Description

One form of wiper blade refill comprises a rubber strip and a separate support vertebra with channels in the upper and lower faces to receive a rib on the rubber strip which is slid into the channel. The sides of the vertebra then have alternate grooves to suit gripping claws which tend to differ in terms of size and shape from one windscreen wiper to another. The disadvantage of this design is that, in the initial stage of assembly, the user is required to feed the rubber strip into one of the alternative slots formed in either of the upper and lower surfaces of the vertebra, to suit the existing claw arrangement of the user's wiper blade harness.

According to the present invention there is provided, for use as part of a windscreen wiper blade refill, an elongated support vertebra defining an internal passageway extending lengthwise of the vertebra for receipt of a rib of a wiper rubber strip and having a restricted mouth opening to the lower face only of the vertebra, the upper face of the vertebra being closed, and upper and lower pairs of grooves formed along the sides of the vertebra, wherein the width of the body of the vertebra is narrower in the region above the upper pair of grooves than in the region below the lower pair of grooves, and wherein the distance between the inner ends of the upper pair of grooves is less than that between the inner ends of the lower pair of grooves.

With this arrangement an internal passageway for the rubber strip is formed in the lower face only of the vertebra (the upper face being closed) so that the vertebra and the rubber strip can be sold ready assembled as there is no alternative means of interconnection. The formation of the pairs of grooves along the sides of the vertebra and the differing widths of the upper and lower faces of the vertebra allows for connection to support claws of a windscreen wiper blade harness of a number of alternative shapes. For example a standard 6 mm width claw (of essentially either rectangular or trapezoidal cross section) could be accommodated within the (suitably sized) upper pair of grooves. Continuing with this example, a standard claw of 8 mm width could then be accommodated within the (suitably sized) lower pair of grooves. In order to allow for the possible trapezoidal cross sectional shape of claws it is preferred that the body of the vertebra in the region above the upper pair of grooves has side walls which taper outwardly from top to bottom of that region, in cross-section.

In the preferred arrangement the internal passageway has sides which slope inwardly towards the top of the passageway, in cross section. It is also preferred that a recess should be formed along the length of the vertebra above and in communication with the top of the internal passageway, to accommodate any flash projecting from the top of a wiper rubber strip.

The invention further extends to the combination of an elongated support vertebra of this invention as hereinbefore described with a wiper rubber strip provided with a rib which has been slid into the internal passageway of the vertebra.

The invention may be performed in various ways and a preferred embodiment will now be described, by way of example, with reference to the accompanying drawings, in which:-
Figure 1 is a perspective view of a section of a support vertebra for a windscreen wiper rubber strip of this invention;
Figure 2 is a cross section through the strip shown in Figure 1; and
Figures 3 to 5 illustrate the integration of the vertebra of Figure 1 with a wiper rubber strip and support claws of a windscreen wiper blade harness.

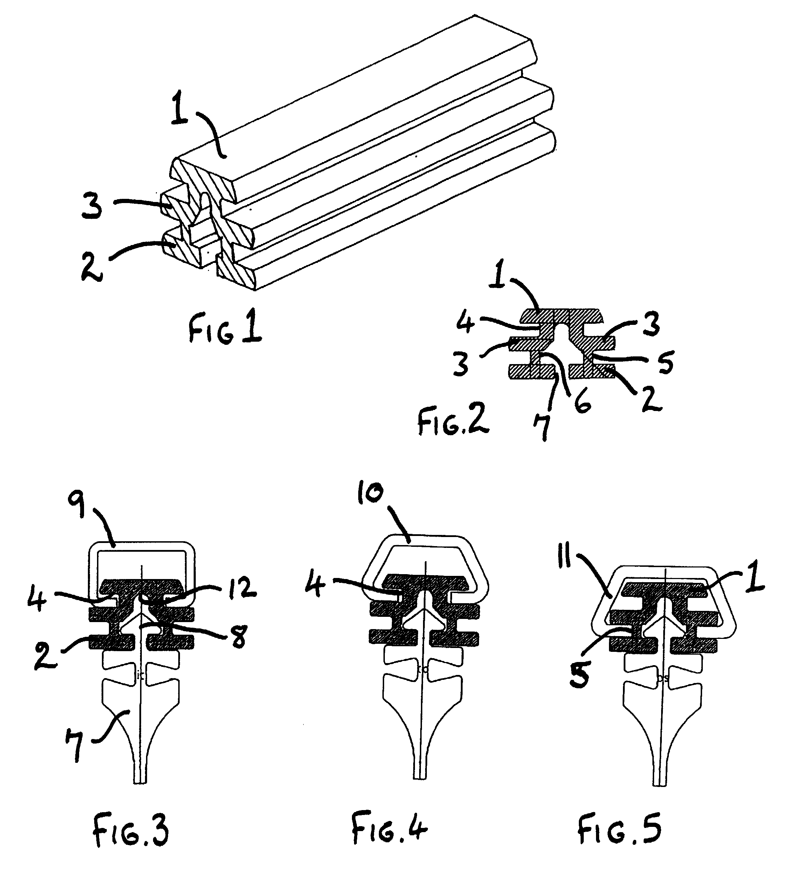

The vertebra shown in Figures 1 and 2 has an upper face 1, a lower face 2 and intermediate side strips 3. The upper face 1 and the strips 3 define between them a pair of grooves 4 whilst the intermediate strips 3 and the lower face 2 define an alternate pair of grooves 5. The inner faces of the grooves 5 are set apart to a greater extent to the inner faces of the grooves 4. An internal passageway 6 extends the length of the vertebra and communicates through a restricted mouth 7 in the lower face 2. A recess 12 is provided to accommodate any flash which might be present on the wiper rubber 7.

As can be seen from Figure 3 a wiper rubber strip 7 is interconnected with the vertebra by sliding a rib 8 along the passageway 6. A claw 9 of the wiper blade harness can then be slid into the upper pair of grooves 4. This claw 9 defines a gap of 6 mm width and the width of the upper face 1 and the spacing between the inner faces of the grooves 4 is designed specifically to support such a claw. An alternative form of claw 10, as shown in Figure 4, is of generally trapezoidal cross sectional shape, but again is mounted in the grooves 4 as the width between the inner ends of the claws is comparable to the spacing between the inner faces of the grooves 4. A further alternative form of claw 11 is shown in Figure 5. Again this is of trapezoidal cross sectional shape but the spacing between the inner ends of the arms of the claw 11 is greater than for the claw 10 (for example 8 mm). This claw therefore has to be accommodated within the grooves 5 and the claw fits over the upper face 1 and the strips 3. As can be seen the upper face 1 is tapered at the sides to allow for the shape of the claw 11.

The vertebra shown in Figure 1 can be pre-assembled with the wiper rubber strip for sale to the ultimate customer who can then attach it directly to the claws of alternative designs found on a number of vehicles so that the extent of assembly involved in attaching a windscreen wiper refill is minimized.

## Claims

1. For a windscreen wiper blade refill, an elongated support vertebra defining an internal passageway extending lengthwise of the vertebra for receipt of a rib of a wiper rubber strip and having a restricted mouth opening to the lower face only of the vertebra, the upper face of the vertebra being closed, and upper and lower pairs of grooves formed along the sides of the vertebra, wherein the width of the body of the vertebra is narrower in the region above the upper pair of grooves than in the region below the lower pair of grooves, and wherein the distance between the inner ends of the upper pair of grooves is less than that between the inner ends of the lower pair of grooves.

2. A support vertebra according to Claim 1, wherein the body of the vertebra in the region above the upper pair of grooves has side walls which taper outwardly from top to bottom of that region, in cross-section.

3. A support vertebra according to Claim 1 or Claim 2, wherein the internal passageway has sides which slope inwardly towards the top of the passageway, in cross section.

4. A support vertebra according to any one of Claims 1 to 3, wherein a recess is formed along the length of the vertebra above and in communication with the top of the internal passageway.

5. The combination of a support vertebra according to any one of Claims 1 to 4 with a wiper blade rubber strip provided with a rib which has been slid into the internal passageway of the vertebra.

6. An elongated support vertebra for a windscreen wiper blade refill alone or in combination with a wiper blade rubber strip, substantially as herein described with reference to the accompanying drawings.
